# EUROPÄISCHE PATENTANMELDUNG

(11) **EP 1 316 884 A2**
(43) Veröffentlichungstag der Anmeldung: **04.06.2003**
(21) Anmeldenummer: 02025398.5
(22) Anmeldetag: 14.11.2002
(51) Int. Cl.: G06F 11/14

(54) **Verfahren zur Generierung und/oder Ausführung eines diversifizierten Programmablaufs**

(30) Priorität: 28.11.2001 DE 10158317
(71) Anmelder: SIEMENS AKTIENGESELLSCHAFT, 80333 München (DE)
(72) Erfinder: Pavlik, Rolf-Dieter, 91058 Erlangen (DE)

(57) **Zusammenfassung**

Die Erfindung betrifft ein Verfahren zur Generierung und/oder Ausführung eines diversitären Programmablaufs aus einem Programmquellcode (Q) für bzw. auf mindestens zwei Bearbeitungseinheiten (BE1, BE2) von Werkzeug-, Produktionsmaschinen und Robotern. Dabei wird mit dem Programmquellcode (Q) mittels eines Compilers (C) ein Maschinencode (MC) für mindestens eine Bearbeitungseinheit (BE1,BE2) mit einem programmierbaren Bearbeitungsbaustein (BB1,BB2) generiert. Aus dem Programmquellcode (Q) wird mittels eines Umsetzers (U) oder Interpreterprogramms eine Beschreibungsdatei (B) erzeugt. Diese wird in mindestens einer weiteren Bearbeitungseinheit (BE1,BE2) interpretativ von mindestens einem programmierbaren Bearbeitungsbaustein (BB1,BB2) abgearbeitet. Die in mindestens einem gemeinsamen Speicher (S) abgelegten Daten der Bearbeitungseinheiten (BE1,BE2) werden jeweils mittels Datenvergleichs (DV1,DV2) auf Übereinstimmung geprüft.

## Beschreibung

Verfahren zur Generierung und/oder Ausführung eines diversitären Programmablaufs

Die Erfindung bezieht sich auf ein Verfahren zur Generierung und/oder Ausführung eines diversitären Programmablaufs aus einem Programmquellcode für bzw. auf mindestens zwei Bearbeitungseinheiten von Werkzeug-, Produktionsmaschinen und Robotern.

Um Maschinen, Produktionsgüter, Personen im Sicherheitsbereich von Maschinen etc. vor Gefahren zu schützen, werden üblicherweise Sicherheitsbereiche eingerichtet, die beispielsweise durch Sensoren überwacht werden. Eine auf die Sicherheit der Maschine gerichtete Verknüpfungslogik auf einer programmierbaren Steuerung führt beim Verletzen des Sicherheitsbereiches eine definierte Aktion aus.

Die sicherheitsbezogenen Aktionen können unter anderem Stillsetzen, Handlungen im Notfall, Geschwindigkeitsbegrenzung, Positionsbegrenzung usw. umfassen. Dabei bieten die sicherheitsbezogenen Aktionen oder Sicherheitsfunktionen einen Systemdurchgriff direkt bis hin zu den elektrischen Antrieben und Messsystemen. Eine zuverlässige Funktion von sicheren Funktionsbausteinen in auszuführenden Programmen ist dabei wesentlich.

Der Begriff sicherheitsgerichtet bedeutet in diesem Zusammenhang, dass systematische und zufällige Fehler, sowie Ausfälle, erkannt und beherrscht werden. Eine Möglichkeit hierzu bietet der Einsatz von Diversität, bei Rechner- oder Steuerungssystemen von Werkzeug-, Produktionsmaschinen und Robotern, bei der beispielsweise mehrere Programme erstellt werden, welche die gleiche Spezifikation erfüllen sollen. Dabei ermöglicht ein Vergleich der von einzelnen Programmvarianten berechneten Ergebnisse neben der Entwurfsfehlererkennung auch eine Erkennung permanenter und transienter Hardwarefehler.

Üblicherweise wird hierzu ein Verknüpfungsprogramm redundant parallel bearbeitet und die Ergebnisse zyklisch verglichen. Im Fall einer Abweichung der Rechenergebnisse wird umgehend ein sicherer Zustand der Maschine oder eines Teilbereichs der Maschine eingeleitet.

Aufgabe der Erfindung ist es, die Generierung von diversitären Programmen aus einem Programmquellcode zu ermöglichen.

Gemäß der Erfindung wird diese Aufgabe dadurch gelöst, dass
1.1 aus dem Programmquellcode mittels eines Compilers Maschinencode für mindestens eine Bearbeitungseinheit mit einem programmierbaren Bearbeitungsbaustein generiert wird,
1.2 aus dem Programmquellcode mittels eines Umsetzers oder Interpreterprogramms eine Beschreibungsdatei erzeugt wird,
1.3 die Beschreibungsdatei in mindestens einer weiteren Bearbeitungseinheit interpretativ von mindestens einem programmierbaren Bearbeitungsbaustein abgearbeitet wird und
1.4 die in mindestens einem gemeinsamen Speicher abgelegten Daten der Bearbeitungseinheiten jeweils mittels Datenvergleichs auf Übereinstimmung geprüft werden.

Mit Hilfe des erfindungsgemäßen Verfahrens ist es dem Anwender vorteilhaft möglich, nur einen Programmquellcode zu erstellen, mit dem mindestens zwei diversitäre Programme generiert werden können. Die Beschreibungsdatei gewährleistet dabei Konformität der auf den Bearbeitungseinheiten parallel, d.h. gleichzeitig abzuarbeitenden Programmen. Die Abarbeitungszeit der Programme auf den unterschiedlichen Bearbeitungseinheiten ist unterschiedlich, da mindestens ein Programmcode interpretativ abgearbeitet wird. Eine Programmdiversität ist damit gegeben. Für den Anwender oder Systemprogrammersteller ergibt sich ein wesentlicher Zeit- und damit Kostenvorteil, da er einen Programmquellcode nur einmal eingeben muss.

Ein erstes vorteilhaftes Verfahren der Erfindung ist dadurch gekennzeichnet, dass bei einem negativ ausfallenden Datenvergleich die programmierbaren Bearbeitungsbausteine einen sicheren Zustand von mindestens einem Teil oder Abschnitt der Werkzeug-, Produktionsmaschine oder des Roboters einleiten. Dadurch ist gewährleistet, dass bei einer Unstimmigkeit der vorliegenden oder zu berechnenden Daten ein sicherer Zustand der Maschine oder eines Teils der Maschine eingenommen wird.

Ein weiteres vorteilhaftes Verfahren der Erfindung ist dadurch gekennzeichnet, dass mindestens zwei von der Hardware gleiche, programmierbare Bearbeitungsbausteine in den Bearbeitungseinheiten verwendet werden.

Ein weiteres vorteilhaftes Verfahren der Erfindung ist dadurch gekennzeichnet, dass mindestens zwei von der Hardware unterschiedliche programmierbare Bearbeitungsbausteine in den Bearbeitungseinheiten verwendet werden. Damit ist das erfindungsgemäße Verfahren auch vorteilhaft auf unterschiedliche Bearbeitungsbausteine anwendbar. Insbesondere bei fortschreitender technischer Entwicklung oder aufgrund von Kostengründen, können somit die Bearbeitungsbausteine unterschiedlich sein. Aus der Beschreibungsdatei werden für den jeweiligen Bearbeitungsbaustein passend interpretativ abzuarbeitende. Befehle bereitgestellt.

Ein weiteres vorteilhaftes Verfahren der Erfindung ist dadurch gekennzeichnet, dass für mindestens einen Bearbeitungsbaustein BB1, BB2 ein anwender- oder maskenprogrammierbarer Logikbaustein verwendet wird. Somit können vorteilhaft optimale Lösungen mittels FPGA (Field Programmable Gat Array) oder ASIC (Application Specific Integrated Circuit) realisiert werden.

Ein weiteres vorteilhaftes Verfahren der Erfindung ist dadurch gekennzeichnet, dass die Quelldatei im wesentlichen von einem graphischen Programmeditor generiert wird. Somit können Verknüpfungen und Zusammenhänge vorteilhaft graphisch programmiert werden, wobei der graphische Editor auch aus der ihm vorliegenden Information die Quelldatei erzeugen kann.

Ein weiteres vorteilhaftes Verfahren der Erfindung ist dadurch gekennzeichnet, dass aus der Quelldatei direkt oder mittels eines Umsetzers oder Interpreterprogramms eine Beschreibungsdatei erzeugt wird. Somit kann die Beschreibungsdatei automatisch aus dem Quellcode erzeugt werden.

Ein weiteres vorteilhaftes Verfahren der Erfindung ist dadurch gekennzeichnet, dass aus der Beschreibungsdatei mittels eines Umsetzers der Maschinencode erzeugt wird. Damit kann die Beschreibungsdatei sowohl Grundlage eines compilierten Maschinencodes, sowie eines Programmcodes sein, der interpretativ auf einer Bearbeitungseinheit abgearbeitet wird.

Ein Ausführungsbeispiel der Erfindung ist in den Zeichnungen dargestellt und wird im folgenden näher erläutert. Dabei zeigen:
- FIG 1: ein Blockschaltdiagramm zur Erzeugung eines diversitären Programmablaufs und
- FIG 2: eine schematische Darstellung zur Ausführung von diversitären Programmen auf Bearbeitungseinheiten.

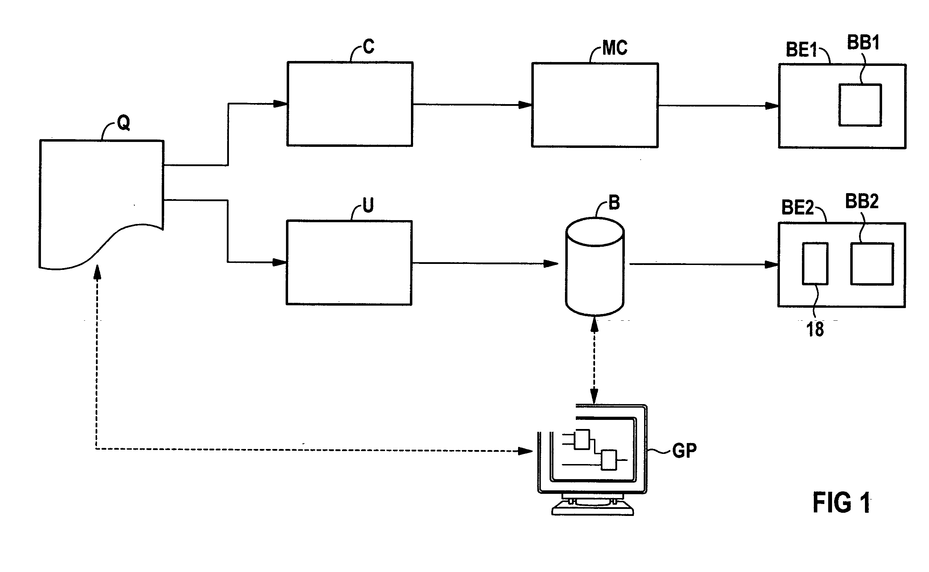

In der Darstellung gemäß FIG 1 ist ein Blockschaltdiagramm zur Erzeugung eines diversitären Programmablaufs dargestellt. Dabei wird ausgehend von einem Programmquellcode Q über einen Compiler C ein Maschinencode MC generiert, der von dem Bearbeitungsbaustein BB1 auf der Bearbeitungseinheit BE1 abgearbeitet wird.

Erfindungsgemäß wird aus dem Programmquellcode Q mittels eines Umsetzers oder eines Interpreterprogramms eine Beschreibungsdatei B erzeugt, die interpretativ von dem Bearbeitungsbaustein BB2 auf der Bearbeitungseinheit BE2 abgearbeitet wird. Die interpretative Bearbeitung auf dem Bearbeitungsbaustein BB2 gewährleistet einen unterschiedlichen Zeitbedarf in der Abarbeitung im Vergleich zur Bearbeitungszeit, die zur Abarbeitung des Maschinencodes MC auf dem Bearbeitungsbaustein BB1 benötigt wird. Die Bearbeitungseinheiten BE1 und BE2, sowie die Bearbeitungsbausteine BB1 und BB2 können unterschiedlich aufgebaut sein. Sie bearbeiten zwar im Ursprung die Syntax des Programmquellcodes Q, jedoch werden auf unterschiedlichen Pfaden mittels unterschiedlicher Programme unterschiedliche Befehlsfolgen generiert, die von den Bearbeitungsbausteinen BB1 und BB2 abgearbeitet werden. Die Beschreibungsdatei B beinhaltet dabei relevante Informationen, die im Programmquellcode Q hinterlegt sind. Sie dient als Basis für die Bearbeitungseinheit BE2, die mittels eines fest installierten Software-Interpreterbausteins IB interpretativ den Inhalt der Beschreibungsdatei B abarbeiten.

Da die graphische Programmierung mittels eines graphischen Programmeditors GP eine komfortable Möglichkeit darstellt, einen Programmablauf einfach in ein Rechensystem einzugeben oder zu visualisieren, ist auch hier die Möglichkeit vorgesehen, direkt aus dem graphischen Programmeditor GP die Beschreibungsdatei B zu erzeugen und/oder aus dem graphischen Programmeditor GP einen Programmquellcode Q zu generieren. Da diese Möglichkeiten optional sind, sind die hierzu gehörenden Pfeilverbindungen, die Datenpfade darstellen sollen, gestrichelt eingezeichnet. In der Darstellung sind des Weiteren sämtliche Datenpfade durch Pfeile oder Doppelpfeile gekennzeichnet.

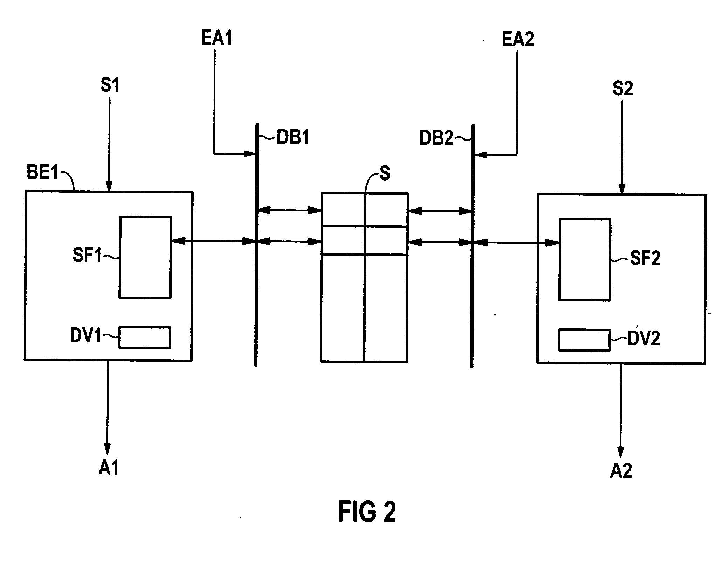

In der Darstellung gemäß FIG 2 ist eine schematische Darstellung zur Ausführung von diversitären Programmen auf Bearbeitungseinheiten BE1, BE2 dargestellt. Dabei sind die bereits in FIG 1 erläuterten Bearbeitungseinheiten BE1 und BE2 in dieser Darstellung durch einen weiteren symbolischen Programmblock, nämlich einen Datenvergleich DV1, DV2, sowie durch die aus dem Programmquellcode mittels Compiler C und Umsetzer U generierten sicheren Funktionsbausteine SF1, SF2 ergänzt. Diese sind in die Bearbeitungseinheiten BE1 und BE2 eingezeichnet.

Über eine Sensorik S1, S2 gelangt eine Information, wie beispielsweise Not-Aus- oder Türsensorsignale, in die Bearbeitungseinheit BE1, BE2, die zusammen mit Programmbefehlsfolgen zu bestimmten Rechenergebnissen führt. Ergebnis kann beispielsweise sein, dass ein Aktor A1, A2, wie beispielsweise eine Bremse (Bremssignal) oder ein Sicherheitsschütz, angesprochen wird. Dabei sind Sensoren S1, S2 und Aktoren A1, A2 mindestens jeweils zweikanalig ausgeführt. In die beiden dargestellten Bearbeitungseinheiten BE1 und BE2 gelangen jeweils Sensorsignale, die aufgrund ihrer Ausführung eine gleiche Information zweikanalig liefern. Im Fehlerfall, d.h. wenn beispielsweise das Sensorsignal S1 nicht mit dem Sensorsignal S2 übereinstimmt wird die Maschine mittels der sicheren Funktionsbausteine SF1, SF2 in einen sicheren Maschinenzustand überführt.

Zu den Sensorsignalen S1, S2 können noch weitere Ein-/Ausgabeinformationen EA1, EA2 gelangen, die über einen Datenbus DB1, DB2 in einen Speicher S, beispielsweise ein Dual Port RAM, geschrieben werden. In diesen Speicher S werden ebenso Berechnungsdaten der Bearbeitungseinheiten BE1, BE2 abgelegt. Nach jedem oder nach definierten Programmablaufschritten wird mittels eines Datenvergleichs DV1, DV2 im Speicher S die Plausibilität der dort abgelegten Daten durch die Bearbeitungseinheiten BE1 und BE2 überprüft. Wird hier eine Unstimmigkeit festgestellt, so gehen die jeweiligen Bearbeitungseinheiten BE1 und BE2 in einen sicheren Maschinenmodus über, in dem sie sichere Funktionsbausteine SF1 und SF2 (Softwarebausteine) ausführen.

Um zu vermeiden, dass systematische und/oder transiente Hardware- oder Programm- oder Datenfehler unbemerkt bleiben, wird in mindestens einer Bearbeitungseinheit BE1, BE2 ein kompilierter Maschinencode MC ausgeführt, während in mindestens einer weiteren Bearbeitungseinheit BE1, BE2 der Inhalt der Beschreibungsdatei B interpretativ ausgeführt wird. Als programmierbare Bearbeitungsbausteine BB1, BB2 können dabei unter anderem gleichartige oder jeweils unterschiedliche Controller, FPGAs und ASICs verwendet werden. Hierbei handelt es sich um anwender- oder maskenprogrammierbare Logikbausteine, die je nach Anwendungsfall und Optimierungsmöglichkeit angesetzt werden.

## Patentansprüche

1. Verfahren zur Generierung und/oder Ausführung eines diversitären Programmablaufs aus einem Programmquellcode für bzw. auf mindestens zwei Bearbeitungseinheiten von Werkzeug-, Produktionsmaschinen und Robotern, **dadurch gekennzeichnet, dass**
1.1 aus dem Programmquellcode (Q) mittels eines Compilers (C) Maschinencode (MC) für mindestens eine Bearbeitungseinheit (BE1,BE2) mit einem programmierbaren Bearbeitungsbaustein (BB1,BB2) generiert wird,
1.2 aus dem Programmquellcode (Q) mittels eines Umsetzers (U) oder Interpreterprogramms eine Beschreibungsdatei (B) erzeugt wird,
1.3 die Beschreibungsdatei (B) in mindestens einer weiteren Bearbeitungseinheit (BE1,BE2) interpretativ von mindestens einem programmierbaren Bearbeitungsbaustein (BB1,BB2) abgearbeitet wird und
1.4 die in mindestens einem gemeinsamen Speicher (S) abgelegten Daten der Bearbeitungseinheiten (BE1,BE2) jeweils mittels Datenvergleichs (DV1,DV2) auf Übereinstimmung geprüft werden.

2. Verfahren nach Anspruch 1, **dadurch gekennzeichnet, dass** bei einem negativ ausfallenden Datenvergleich (DV1,DV2) die programmierbaren Bearbeitungsbausteine (BB1,BB2) einen sicheren Zustand von mindestens einem Teil oder Abschnitt der Werkzeug-, Produktionsmaschine oder des Roboters einleiten.

3. Verfahren nach Anspruch 1 oder 2, **dadurch gekennzeichnet, dass** mindestens zwei von der Hardware gleiche, programmierbare Bearbeitungsbausteine (BB1,BB2) in den Bearbeitungseinheiten (BE1,BE2) verwendet werden.

4. Verfahren nach einem der vorstehenden Ansprüche, **dadurch gekennzeichnet, dass** mindestens zwei von der Hardware unterschiedliche programmierbare Bearbeitungsbausteine (BB1,BB2) in den Bearbeitungseinheiten (BE1,BE2) verwendet werden.

5. Verfahren nach einem der vorstehenden Ansprüche, **dadurch gekennzeichnet, dass** für mindestens einen Bearbeitungsbaustein (BB1,BB2) ein anwender- oder maskenprogrammierbarer Logikbaustein verwendet wird.

6. Verfahren nach einem der vorstehenden Ansprüche, **dadurch gekennzeichnet, dass** die Quelldatei (Q) im wesentlichen von einem graphischen Programmeditor (GP) generiert wird.

7. Verfahren nach einem der vorstehenden Ansprüche, **dadurch gekennzeichnet, dass** aus der Quelldatei (Q) direkt oder mittels eines Umsetzers (U) oder Interpreterprogramms eine Beschreibungsdatei (B) erzeugt wird.

8. Verfahren nach einem der vorstehenden Ansprüche, **dadurch gekennzeichnet, dass** aus der Beschreibungsdatei (B) mittels eines Umsetzers (U) der Maschinencode (MC) erzeugt wird.
